# EUROPÄISCHE PATENTSCHRIFT

(11) **EP 2 458 210 B1**
(45) Veröffentlichungstag und Bekanntmachung des Hinweises auf die Patenterteilung: **27.01.2016**
(21) Anmeldenummer: 11190616.0
(22) Anmeldetag: 24.11.2011
(51) Int. Cl.: F04B 9/04, F04B 39/00, F04B 49/12, F04B 53/00, F16C 3/22, F16C 3/28, F16C 3/10

(54) **Pumpengetriebekurbelwelle**
Crankshaft for a pump gear mechanism
Arbre à manivelle pour un engrenage de pompe

(30) Priorität: 24.11.2010 DE 102010052426
(43) Veröffentlichungstag der Anmeldung: 30.05.2012
(73) Patentinhaber: SPX Flow Technology Norderstedt GmbH, 22844 Norderstedt (DE)
(72) Erfinder: Reif, Thomas, 24558 Henstedt-Ulzburg (DE)
(74) Vertreter: Grosse Schumacher Knauer von Hirschhausen

(56) Entgegenhaltungen:
- EP-A1- 0 119 112
- EP-A1- 1 736 666
- WO-A1-93/22558
- DE-A1-102006 009 152
- FR-A- 1 120 102
- FR-A- 1 604 390
- US-A- 3 468 174
- US-A- 4 264 286
- US-A- 4 977 793
- US-A- 5 253 546

## Beschreibung

Die Erfindung betrifft eine Pumpengetriebekurbelwelle gemäß dem Oberbegriff von Anspruch 1, wie beispielsweise aus der GB 1,182,908 bekannt.

Pumpengetriebekurbelwellen werden insbesondere zum Antrieb von Verdrängerpumpen eingesetzt, die zur gemeinsamen Förderung eines Fluids zusammenwirken. Beispielsweise können drei Verdrängerpumpen jeweils mit einer Phasenverschiebung von 120 Grad zusammenwirken, um eine möglichst gleichmäßige Förderung eines Fluids zu erreichen.

Die EP 1 736 666 A1 offenbart ein derartiges Pumpengetriebe mit einer Pumpengetriebkurbelwelle, wobei die gesamte Offenbarung der EP 1 736 666 A1 durch Bezugnahme in die vorliegende Anmeldung aufgenommen ist. Des Weiteren sind Pumpengetriebe bekannt, die von der vorliegenden Anmelderin unter der Bezeichnung "NOVAPLEX" vertrieben werden. Ferner sind solche Pumpengetriebekurbelwellen auch aus der FR 1 120 102 A oder der US 3,468,174 bekannt.

Bei der Erweiterung einer bestehenden Anlage und zur Erhöhung der Fördermenge, kann es erforderlich sein, eine Anlage mit beispielsweise drei Verdrängerpumpen um eine oder mehrere Verdrängerpumpen zu erweitern. Dazu ist es notwendig, die Phasenverschiebung entsprechend einzustellen, um weiterhin eine möglichst gleichmäßige Fluidströmung zu erreichen. Das ist insbesondere bei Anlagen wichtig, bei denen Verdrängerpumpen zum Antrieb von Membranpumpenköpfen verwendet werden, die insbesondere ein Fluid unter hohem Druck und bei einer hohen Temperatur fördern. Beispielsweise kann mit einem Membranpumpenkopf ein weiterer Membranpumpenkopf gesteuert werden. Dabei ist es möglich, Fluide, insbesondere Flüssigkeiten, bei hohen Temperaturen von beispielsweise mehr als 150 Grad Celsius und unter hohem Druck von beispielsweise mehr als 100 Bar zu fördern.

Die Anpassung der bestehenden Pumpengetriebe an die durch die gewünschte Erweiterung veränderten Bedingungen ist bei Pumpengetrieben bzw. Pumpengetriebekurbelwellen und insbesondere bei modular erweiterbaren Pumpengetrieben gemäß dem Stand der Technik aufwendig, denn die Pumpengetriebe müssen auseinandergebaut werden, und neue Pumpengetriebekurbelwellen müssen eingebaut werden, die Kröpfungen mit der gewünschten Phasenverschiebung aufweisen. Ein derartiger Umbau ist aufwendig und teuer, insbesondere weil große und komplizierte Teile ausgetauscht werden müssen. Das ist insbesondere bei Pumpengetrieben mit einer hohen Leistung zur Förderung von Fluiden bzw. Flüssigkeiten unter hohem Druck sehr teuer.

Der Erfindung liegt daher die Aufgabe zugrunde, eine Pumpengetriebekurbelwelle anzugeben, die einen einfachen Aufbau aufweist und eine einfache Erweiterung eines Pumpengetriebes erlaubt, um einen Anschluss für eine oder mehrere weitere Verdrängerpumpen zu ermöglichen.

Die Aufgabe der Erfindung wird mit einer Pumpengetriebekurbelwelle gemäß den Merkmalen von Anspruch 1 gelöst. Vorteilhafte Ausgestaltungen der Erfindung sind in den abhängigen Ansprüchen angegeben.

Gemäß einem Aspekt der Erfindung wird eine Pumpengetriebekurbelwelle mit einer Antriebswelle und mehreren Kröpfung angegeben, die jeweils in zumindest einem Pleuel zum Antrieb eines Verdrängers einer Pumpe anordenbar ist, wobei die Pumpengetriebekurbelwelle derart ausgebildet ist, dass mehrere Kröpfungen in unterschiedlichen Winkeln zu der Antriebswelle mit der Antriebswelle formschlüssig und lösbar verbindbar ist, und dass die Antriebswelle mit den mehreren Kröpfungen formschlüssig drehfest verbunden ist. Die Erfindung zeichnet sich dadurch aus, dass jede Kröpfung in unterschiedlichen Orientierungen zu der Antriebswelle und somit zu zumindest einer anderen Kröpfung anordenbar ist, indem die Kröpfungen Aufnahmen mit einer Innenkontur aufweisen und die Antriebswelle eine Außenkontur aufweist, wobei die Antriebswelle mit ihrer Außenkontur durch die Innenkontur der Aufnahmen der Kröpfungen steckbar ist.

Eine erfindungsgemäße Pumpengetriebekurbelwelle hat den Vorteil, dass die Kröpfung in unterschiedlichen Orientierungen zu der Antriebswelle und somit zu der zumindest anderen Kröpfung angeordnet werden kann. Dadurch kann die gewünschte Phasenverschiebung zwischen mehreren getriebenen Verdrängerpumpen bzw. Kolbenpumpen erreicht werden. Bei einer Erweiterung von beispielsweise drei Kröpfungen auf vier Kröpfungen kann eine Phasenverschiebung von 120 Grad auf 90 Grad eingestellt werden. Sofern die angetriebenen Verdrängerpumpen nicht in den gleichen Winkel zu der Antriebswelle angeordnet sind, ist es klar, dass die unterschiedlichen Winkel der Verdrängerpumpen zu der Antriebswelle berücksichtigt werden müssen, um die gewünschte Phasenverschiebung zwischen den Verdrängerpumpen zu erreichen. Beispielsweise ist es bei Pumpen, die von der Anmelderin unter der Bezeichnung Novaplex- (NOVAPLEX Classic, NOVAPLEX Integral bzw. NOVAPLEX Vector) bzw. Triplexpumpe vertrieben werden, üblich, die Verdrängerpumpen in einem Raumwinkel bzw. Winkelbereich um die Antriebswelle von ungefähr 90 Grad anzuordnen, um eine möglichst kleine und kompakte Bauweise des Gesamtsystems zu erreichen. Denkbar sind auch Winkelbereiche von beispielsweise 45 Grad, 60 Grad 120 Grad und 150 Grad bzw. passende Zwischenwerte. Dieser die vorliegende Erfindung betreffende prinzipielle Aufbau bzw. diese Anordnung von Pumpen ist beispielsweise in der EP 1 736 666 A1 offenbart. Erfindungsgemäß können die Pumpen auch in einen Winkelbereich von ungefähr 60 Grad bis ungefähr 180 Grad angeordnet werden. Vorteilhaft ist eine Anordnung der Pumpen in einem Winkelbereich von weniger als 180 Grad bzw. weniger als 150 Grad, um die Pumpen oberhalb einer Ebene, beispielsweise eines Trägers bzw. des Bodens anzuordnen.

Bei der Anordnung von vier Verdrängerpumpen kann ein entsprechend größerer Winkelbereich gewählt werden. Vorteilhafterweise ist der Winkelbereich immer kleiner als 180 Grad. Dem Fachmann ist es bekannt, wie er den Winkelversatz zwischen der Antriebswelle und den Kröpfungen einstellen muss, um die gewünschte Phasenverschiebung zwischen den angetriebenen Pumpen zu erreichen.

Erfindungsgemäß kann die Antriebswelle durch die zumindest eine Kröpfung verlaufen, mit der die Antriebswelle formschlüssig verbunden ist.

Erfindungsgemäß kann die Antriebswelle eine Außenverzahnung aufweisen, und die zumindest eine mit der Antriebswelle formschlüssig verbundene Kröpfung kann eine Innenverzahnung aufweisen.

Erfindungsgemäß kann die Antriebswelle einen Querschnitt eines Polygons, vorzugsweise eines regelmäßigen Polygons und weiter vorzugsweise eines gleichseitigen Dreiecks, gleichseitigen Vierecks, Quadrats, gleichseitigen Fünfecks, gleichseitigen Sechsecks, und/oder eines gleichseitigen bzw. beliebigen geeigneten Vielecks aufweisen.

Erfindungsgemäß kann die Antriebswelle mit mehreren Kröpfungen und vorzugsweise allen Kröpfungen formschlüssig verbunden sein.

Erfindungsgemäß kann die Pumpengetriebekurbelwelle eine oder mehrere Lagerscheiben vorzugsweise zur Aufnahme in jeweils einer Lagerschale aufweisen, die formschlüssig mit der Antriebswelle verbunden ist bzw. sind.

Die Erfindung betrifft auch ein Pumpengetriebe mit einer Pumpengetriebekurbelwelle gemäß der Erfindung und mehreren auf den Kröpfungen angeordneten Pleuel zum Antrieb von Verdrängern bzw. Kolben von Pumpen.

Bei Pumpengetriebekurbelwellen, die Kröpfungen aufweisen, die ungefähr eine Pleueldicke in Axialrichtung der Antriebswelle voneinander entfernt sind, besteht gemäß den bekannten Betriebskurbelwellen der Nachteil, dass zumindest die innen liegenden Pleuel eine zweiteilige Lagerschale zur Aufnahme der Kröpfung aufweisen müssen, um eine Montage zu ermöglichen, denn die Kröpfung ist mit der Antriebswelle fest verbunden. Bei den bekannten Pumpengetriebekurbelwellen sind die Kröpfungen als Schmiedeteile zusammen mit der Antriebswelle ausgebildet. Die mittleren Kröpfungen sind in Folge der gewünschten Phasenverschiebung der angetriebenen Pumpen zu einander versetzt, so dass die Pleuel nicht über die äußeren Kröpfungen auf die inneren Kröpfungen geschoben werden können. Prinzipiell besteht die Möglichkeit, die angetriebenen Pumpen gleichmäßig um das Pumpengetriebe herum anzuordnen. Das ist jedoch unerwünscht, weil dadurch ein sehr großer Platzbedarf erforderlich ist.

Der Erfindung liegt daher auch die Aufgabe zugrunde, eine Pumpengetriebekurbelwelle anzugeben, bei der einteilige Pleuel verwendet werden können.

Diese Aufgabe der Erfindung wird mit einer erfindungsgemäßen Pumpengetriebekurbelwelle gelöst.

Erfindungsgemäß kann bzw. können somit der bzw. die Pleuel eine einteilige Aufnahme zur Aufnahme der Kröpfung aufweisen und/oder der Pleuel bzw. die Pleuel einteilig ausgebildet sein.

Einteilige Pleuel haben den Vorteil, dass sie kostengünstiger herzustellen sind, weil der Pleuel nicht gesägt und nachgearbeitet werden muss. Es ergibt sich auch eine leichtere Montage.

Erfindungsgemäß kann eine zusätzliche Kröpfung fest mit der Antriebswelle verbunden und/oder einteilig mit dieser ausgebildet sein. Auch bei diesen Ausführungen der Erfindung können vorteilhafterweise einteilige Pleuel verwendet werden, weil zumindest zwei Pleuel von gegenüberliegenden Seiten auf der festen Kröpfung bzw. den festen Kröpfungen angeordnet werden können. Weitere Pleuel können gegebenenfalls auf danach mit der Antriebswelle formschlüssig zu verbindenden Kröpfungen angeordnet werden.

Gemäß einer bevorzugten Ausführung der Erfindung können zwei zusätzliche Kröpfungen fest mit der Antriebswelle verbunden und/oder einteilig mit der Antriebswelle ausgebildet sein. Dabei können die beiden fest mit der Antriebswelle verbundenen und/oder mit der Antriebswelle einteilig ausgebildeten Kröpfungen benachbart zueinander angeordnet sein. Bei diesen Ausführungen der Erfindung kann die zumindest eine formschlüssig mit der Antriebswelle verbundene Kröpfung benachbart zu den beiden fest mit der Antriebswelle verbundenen und/oder einteilig mit der Antriebswelle ausgebildeten Kröpfungen angeordnet sein.

Erfindungsgemäß können die Kröpfungen in Längsrichtung der Antriebswelle um ungefähr eine Pleueldicke zueinander versetzt angeordnet sein und/oder können benachbarte Kröpfungen in Achsrichtung der Antriebswelle einen Abstand aufweisen, der im Wesentlichen einer Pleueldicke entspricht. Diese Ausführungen der Erfindung sind besonders vorteilhaft in Verbindung mit einteiligen Pleueln.

Erfindungsgemäß kann ein einteiliger Pleuel auf einer Kröpfung angeordnet werden und die Antriebswelle zur Montage der Pumpengetriebekurbelwelle kann mit ihrer Außenkontur durch die Innenkontur der Kröpfung gesteckt werden, um einen Formschluss zwischen der Kröpfung und der Antriebswelle herzustellen. Bei Ausführungen mit mehreren um ungefähr eine Pleueldicke zu einander versetzten Kröpfungen können die Kröpfungen mit den angeordneten einteiligen Pleuel übereinander angeordnet werden, wobei der gewünschte Winkelversatz bereits eingestellt werden kann. Anschließend kann die Antriebswelle mit ihrer Außenform durch die entsprechenden Innenformen der Kröpfungen gesteckt werden, um eine formschlüssige Verbindung zwischen der Antriebswelle und den Kröpfungen herzustellen. Bei Ausführungen, bei denen zumindest eine Kröpfung eine formschlüssige Verbindung mit der Antriebswelle herstellt, können beispielsweise zwei fest mit der Antriebswelle ausgebildete Kröpfungen in einem bestimmten Winkelversatz vorgesehen werden. Auf diese beiden Kröpfungen können Pleuel angeordnet werden, und beispielsweise kann eine weitere Kröpfung bzw. können mehrere weitere Kröpfungen mit jeweils einem Pleuel formschlüssig mit der Antriebswelle verbunden werden.

Die Antriebswelle kann entlang ihres Verlaufs eine Außenverzahnung aufweisen, und die mehreren Kröpfungen können jeweils eine entsprechende Innenverzahnung aufweisen. Diese Ausführung hat den Vorteil, dass bei einer eventuellen Erweiterung eine Anlage, bei der mehr Pumpen mit dem Pumpengetriebe anzutreiben sind, die gesamte Anlage nicht auseinandergebaut werden muss, sondern die Antriebswelle kann aus den Kröpfungen herausgezogen und nach Austausch, Anordnung, Einstellung bzw. Verdrehung der Kröpfungen in die jeweils notwendige Winkelanordnung wieder durch die Kröpfungen geschoben werden, um formschlüssige Verbindungen in den erforderlichen Winkelstellungen mit der Antriebswelle zu schaffen. Erfindungsgemäß kann die Antriebswelle einen Abschnitt aufweisen, mit dem die Antriebswelle an eine Pumpengetriebeantriebseinrichtung angeschlossen werden kann.

Wenn beispielsweise eine Erweiterung von drei auf vier Kröpfungen erfolgen soll, kann die Antriebswelle an eine Pumpengetriebeantriebseinrichtung angeschlossen werden, die zwei gegenüberliegende Anschlüsse für Antriebswellen eines Pumpengetriebes aufweisen. Die gewünschte Phasenverschiebung bzw. der gewünschte Winkelversatz zur Einstellung der gewünschten Phasenverschiebung kann über die bestehende Antriebswelle für drei Pumpen erreicht werden. Auf der anderen Seite kann eine kürzere neue Antriebswelle zum Antrieb einer oder mehrerer Kröpfungen, je nach Anzahl der gewünschten Erweiterung angeschlossen werden. Die entsprechende Phasenverschiebung zwischen der zusätzlichen Kröpfung und den alten Kröpfungen zum Antrieb der bestehenden Pumpen kann somit auf leichte Weise erreicht werden.

Die Erfindung wird im Folgenden anhand der in den Figuren gezeigten Ausführungsbeispiele näher beschrieben:
- Figur 1: zeigt eine Schnittansicht durch ein Pumpengetriebe zum Antrieb von vier Pumpen, wobei die vier Pumpen sowie die Anlenkung ihrer Verdränger nicht dargestellt sind.
- Figur 2: zeigt eine Explosionszeichnung der erfindungsgemäßen Ausführung von Figur 1.
- Figur 3: zeigt einen Querschnitt durch die Antriebswelle und eine alternative Ausführung einer erfindungsgemäßen Pumpengetriebekurbelwelle, die insbesondere für ein Pumpengetriebe gemäß der EP 1 736 666 A1 geeignet ist.
- Figur 4: zeigt eine schematische Ansicht der Pumpengetriebekurbelwelle von Figur 3 in Richtung der Achse der Antriebswelle.
- Figur 5: zeigt die Pumpengetriebekurbelwelle von Figur 4 mit jeweils einem zugehörigen Pleuel.
- Figur 6: zeigt eine schematische Ansicht einer weiteren Ausführung einer erfindungsgemäßen Pumpengetriebekurbelwelle in einer der Figur 3 entsprechenden Ansicht.
- Figur 7: zeigt eine schematische Ansicht einer weiteren Ausführung einer erfindungsgemäßen Pumpengetriebekurbelwelle in einer der Figur 3 entsprechenden Ansicht.
- Figur 8: zeigt eine schematische Ansicht einer weiteren Ausführung einer erfindungsgemäßen Pumpengetriebekurbelwelle in einer der Figur 3 entsprechenden Ansicht.
- Figur 9: zeigt eine schematische Ansicht einer weiteren Ausführung einer erfindungsgemäßen Pumpengetriebekurbelwelle in einer der Figur 3 entsprechenden Ansicht.
- Figur 10: zeigt eine schematische Explosionsansicht einer erfindungsgemäßen Pumpengetriebekurbelwelle gemäß Fig. 3 mit einer Lagerscheibe und einem zugehörigen Pleuel.
- Figur 11: zeigt eine weitere Ausführung einer erfindungsgemäßen Pumpengetriebekurbelwelle mit einem zugehörigen Pleuel.
- Figur 12: zeigt eine weitere Ausführung einer erfindungsgemäßen Pumpengetriebekurbelwelle mit einem zugehörigen Pleuel.
- Figur 13: zeigt eine teilweise geschnittene und teilweise freigelegte Ansicht eines Pumpengetriebes mit Membranpumpen und einer Pumpengetriebewelle gemäß Fig. 3 entlang der Linie XIII-XIII von Fig. 14.
- Figur 14: zeigt eine teilweise geschnittene und teilweise freigelegte Ansicht des Pumpengetriebes von Fig. 13 entlang der Linie XIV-XIV von Fig. 13.
- Figur 15: zeigt eine der Figur 13 entsprechende teilweise geschnittene und teilweise freigelegte Ansicht einer zu der Ausführung von Fig. 13 alternativen Ausführung eines Pumpengetriebes mit Membranpumpen und einer Pumpengetriebewelle gemäß Fig. 3.
- Figur 16: zeigt eine schematische Explosionsansicht einer Exzenterscheibe mit einer Antriebswelle einer erfindungsgemäßen Pumpengetriebekurbelwelle.
- Figur 17: zeigt eine schematische Explosionsansicht einer Exzenterscheibe mit einer Antriebswelle und Verbindungselementen einer erfindungsgemäßen Pumpengetriebekurbelwelle.
- Figur 17A: zeigt eine schematische Explosionsansicht einer Exzenterscheibe mit einer Antriebswelle und Verbindungselementen einer erfindungsgemäßen Pumpengetriebekurbelwelle.
- Figur 18: zeigt eine schematische Aufsicht der in Figur 17 gezeigten Teile.
- Figur 19: zeigt eine schematische Aufsicht der in Figur 17A gezeigten Teile.
- Figur 20: zeigt eine der Figur 19 entsprechende schematische Aufsicht einer alternativen Ausführung der Erfindung.
- Figur 21: zeigt eine Aufsicht der Exzenterscheibe von Fig. 16 bzw. Fig. 17.
- Figur 22: zeigt eine der Figur 21 entsprechende Aufsicht einer Exzenterscheibe einer alternativen Ausführung der Erfindung.
- Figur 23: zeigt eine der Figur 21 entsprechende Aufsicht einer Exzenterscheibe einer alternativen Ausführung der Erfindung.
- Figur 24: zeigt eine Schnittansicht eines Pleuels mit einer Antriebswelle und Verbindungselementen einer erfindungsgemäßen Pumpengetriebekurbelwelle.
- Figur 25: zeigt eine Aufsicht einer Exzenterscheibe mit einer Antriebswelle und Verbindungselementen einer erfindungsgemäßen Pumpengetriebekurbelwelle.
- Figur 26: zeigt eine Schnittansicht einer Exzenterscheibe mit einer Antriebswelle und Verbindungselementen einer erfindungsgemäßen Pumpengetriebekurbelwelle.
- Figur 27: zeigt eine Schnittansicht einer Exzenterscheibe mit einer Antriebswelle und Verbindungselementen einer erfindungsgemäßen Pumpengetriebekurbelwelle.
- Figur 28: zeigt eine Schnittansicht einer Exzenterscheibe mit einer Antriebswelle und Verbindungselementen einer erfindungsgemäßen Pumpengetriebekurbelwelle.

In der Beschreibung der Ausführungsbeispiele werden folgende Bezugszeichen verwendet, wobei bei den verschiedenen Ausführungsbeispielen sich entsprechende Teile oder gleiche Teile mit gleichen Bezugszeichen bezeichnet werden und wegen der Beschreibung der späteren Ausführungsbeispiele auf die Beschreibung der früheren Ausführungsbeispiele (und ggf. umgekehrt) verwiesen wird:
- 1: Pumpengetriebe
- 10: Antriebswelle
- 11: Formschluss
- 20: Exzenterscheibe (bzw. Kröpfung)
- 21: Formschluss
- 30: Pleuel
- 40: Lagerscheibe
- 50: Pumpengetriebeantriebseinrichtung
- 110: Antriebswelle
- 111: Formschluss
- 120: Exzenterscheibe (bzw. Kröpfung)
- 121: Formschluss
- 130: Pleuel
- 140: Lagerscheibe
- 150: Schneckengetriebe
- 151: Schnecke
- 152: Schneckenrad
- 153: Antriebsmotor
- 153': Antriebsmotor
- 160: Anlenkung
- 170: Pumpe (Verdrängerpumpe bzw. Kolbenpumpe)
- 210: Antriebswelle
- 211: Formschluss
- 215: Exzenterscheibe (bzw. Kröpfung; fest)
- 220: Exzenterscheibe (bzw. Kröpfung; austausch- bzw. einstellbar)
- 221: Formschluss
- 310: Antriebswelle
- 311: Formschluss
- 315: Exzenterscheibe (bzw. Kröpfung; fest)
- 320: Exzenterscheibe (bzw. Kröpfung; austausch- bzw. einstellbar)
- 321: Formschluss
- 410: Antriebswelle
- 411: Formschluss
- 415: Exzenterscheibe (bzw. Kröpfung; fest)
- 420: Exzenterscheibe (bzw. Kröpfung; austausch- bzw. einstellbar)
- 421: Formschluss
- 510: Antriebswelle
- 511: Formschluss
- 515: Exzenterscheibe (bzw. Kröpfung; fest)
- 520: Exzenterscheibe (bzw. Kröpfung; austausch- bzw. einstellbar)
- 521: Formschluss
- 540: Lagerscheibe
- 610: Antriebswelle
- 611: Formschluss
- 620: Exzenterscheibe (bzw. Kröpfung; austausch- bzw. einstellbar)
- 621: Formschluss
- 622: Lagerfläche (für Pleuel)
- 630: Pleuel
- 632: Lagerflächenaufnahme
- 640: Lagerscheibe
- 641: Formschluss
- 710: Antriebswelle
- 711: dreieckiger Querschnitt (Formschluss)
- 720: Exzenterscheibe (bzw. Kröpfung; austausch- bzw. einstellbar)
- 721: dreieckiger Querschnitt (Formschluss)
- 722: Lagerfläche (für Pleuel)
- 730: Pleuel
- 732: Lagerflächenaufnahme
- 810: Antriebswelle
- 811: quadratischer Querschnitt (Formschluss)
- 820: Exzenterscheibe (bzw. Kröpfung; austausch- bzw. einstellbar)
- 821: quadratischer Querschnitt (Formschluss)
- 822: Lagerfläche (für Pleuel)
- 830: Pleuel
- 832: Lagerflächenaufnahme
- 910: Antriebswelle
- 911: Vorsprung bzw. Außenzahn (Formschluss)
- 920: Exzenterscheibe (bzw. Kröpfung; austausch- bzw. einstellbar)
- 921: Aussparung bzw. Rille (Formschluss)
- 922: Lagerfläche (für Pleuel)
- 1010: Antriebswelle
- 1011: Aussparung bzw. Rille (Formschluss)
- 1020: Exzenterscheibe (bzw. Kröpfung; austausch- bzw. einstellbar)
- 1021: Aussparung bzw. Rille (Formschluss)
- 1022: Lagerfläche (für Pleuel)
- 1090: Verbindungsglied
- 1110: Antriebswelle
- 1111: Aussparung bzw. Rille (Formschluss)
- 1120: Exzenterscheibe (bzw. Kröpfung; austausch- bzw. einstellbar)
- 1121: Aussparung bzw. Rille (Formschluss)
- 1122: Lagerfläche (für Pleuel)
- 1190: Verbindungsglied
- 1210: Antriebswelle
- 1211: Aussparung bzw. Rille (Formschluss)
- 1220: Exzenterscheibe (bzw. Kröpfung; austausch- bzw. einstellbar)
- 1221: Aussparung bzw. Rille (Formschluss)
- 1222: Lagerfläche (für Pleuel)
- 1290: Verbindungsglied
- 1320: Exzenterscheibe (bzw. Kröpfung; austausch- bzw. einstellbar)
- 1321: Aussparung bzw. Rille (Formschluss)
- 1420: Exzenterscheibe (bzw. Kröpfung; austausch- bzw. einstellbar)
- 1421: Aussparung bzw. Rille (Formschluss)
- 1510: Antriebswelle
- 1511: Bohrung (Formschluss)
- 1520: Exzenterscheibe (bzw. Kröpfung; austausch- bzw. einstellbar)
- 1521: Bohrung (Formschluss)
- 1521': Bohrung (Formschluss)
- 1522: Lagerfläche (für Pleuel)
- 1590: Verbindungsglied
- 1610: Antriebswelle
- 1611: Aussparung bzw. Rille (Formschluss)
- 1620: Exzenterscheibe (bzw. Kröpfung; austausch- bzw. einstellbar)
- 1621: Aussparung bzw. Rille (Formschluss)
- 1690: Verbindungsglied
- 1710: Antriebswelle
- 1711: Aussparung bzw. Rille (Formschluss)
- 1720: Exzenterscheibe (bzw. Kröpfung; austausch- bzw. einstellbar)
- 1721: Aussparung bzw. Rille (Formschluss)
- 1790: Verbindungsglied
- 1810: Antriebswelle
- 1811: Vorsprung bzw. Ecke (Formschluss)
- 1820: Exzenterscheibe (bzw. Kröpfung; austausch- bzw. einstellbar)
- 1821: Aussparung bzw. Rille (Formschluss)
- 1910: Antriebswelle
- 1911: Vorsprung bzw. Ecke (Formschluss)
- 1920: Exzenterscheibe (bzw. Kröpfung; austausch- bzw. einstellbar)
- 1921: Aussparung bzw. Rille (Formschluss)

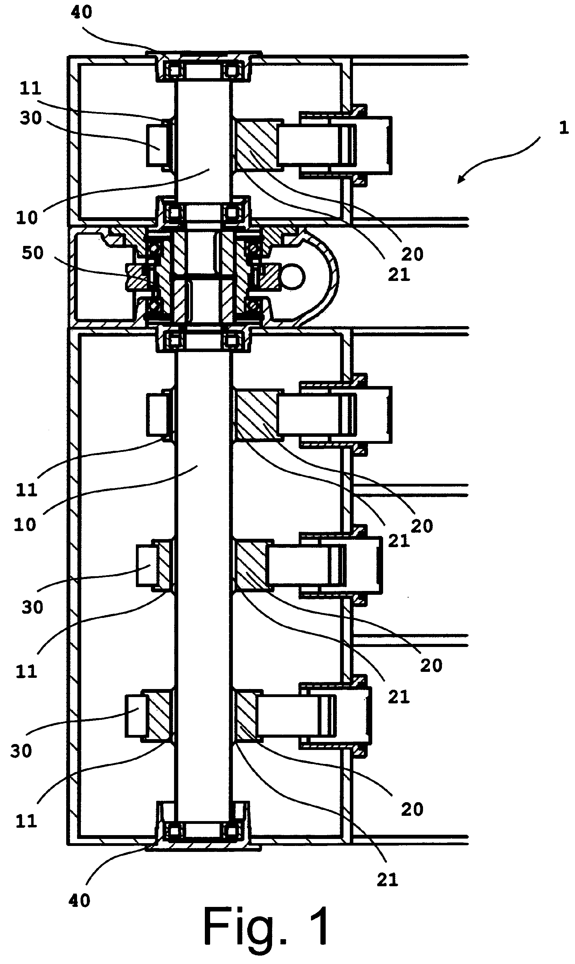

Figur 1 zeigt eine Schnittansicht durch ein Pumpengetriebe 1 mit zwei erfindungsgemäßen Pumpengetriebekurbelwellen. Erfindungsgemäß kann das Pumpengetriebe 1 mit drei Kröpfungen 20 (wenn nur die Antriebswelle 10 mit drei Exzenterscheiben 20 vorgesehen wird) oder mit vier Kröpfungen ausgebildet werden, wenn beide Antriebswellen 10 vorgesehen werden. Dabei können die Winkel erfindungsgemäß eingestellt werden. Die in Figur 1 untere Pumpengetriebekurbelwelle weist eine Antriebswelle 10 mit drei Exzenterscheiben 20 auf, die exzentrisch auf der Antriebswelle 10 angeordnet sind. Die drei Exzenterscheiben bilden drei Kröpfungen, auf denen Pleuel 30 zur Verbindung mit einer nicht dargestellten Verdrängerpumpe bzw. Kolbenpumpe angeordnet sind. Die Verdrängerpumpen sind in einer durch die Längsachse der Antriebswelle verlaufenden Ebene, ähnlich einem Reihenmotor, angeordnet.

Alternativ können die Kolben auch entsprechend einem V-Motor in zwei Reihen angeordnet sein. Andere Anordnungen beispielsweise entsprechend einem Sternmotor bzw. einem Teil eines Sternmotors, d.h. in einem Halb- Drittel- und/oder Viertelkreis sind denkbar.

Die Exzenterscheiben 20 sind derart zueinander winkelversetzt angeordnet, dass die Verdrängerpumpen mit einem Phasenunterschied von 90 Grad zueinander angetrieben werden. Es ist klar, dass bei einer anderen Verdrängerpumpenzahl ein größerer (120 Grad bei 3 Verdrängerpumpen) bzw. ein kleinerer Phasenunterschied (beispielsweise 72 Grad bei 5 Verdrängerpumpen bzw. 60 Grad bei 6 Verdrängerpumpen usw.) bevorzugt wird, um eine möglichst gleichmäßige Förderung zu erreichen.

Die Exzenterscheiben 20 weisen jeweils eine Innenverzahnung auf, und die Antriebswelle 10 weist eine Außenverzahnung auf. Die Verzahnungen bilden für jede Exzenterscheibe jeweils einen Formschluss 11 zur drehfesten formschlüssigen Verbindung der Antriebswelle 10 mit den Exzenterscheiben 20. Die Antriebswelle 10 weist zwei Lagerabschnitte auf, mit denen die Antriebswelle 10 über Lagerscheiben 40 angeordnet ist. Die Lagerscheiben 40 sind in einer Lagerung angeordnet. Die Antriebswelle 10 ist drehfest mit einer Pumpengetriebeantriebseinrichtung verbunden. Die Pumpengetriebeantriebseinrichtung weist dazu eine Innenverzahnung auf, die eine drehfeste Verbindung mit der Außenverzahnung der Antriebswelle 10 herstellt.

Das Pumpengetriebe weist eine weitere Antriebswelle 10 auf, die über zwei Lagerscheiben 40 drehbar gelagert ist und eine Kröpfung umfasst, die formschlüssig mit der Antriebswelle 10 verbunden ist. Die Kröpfung ist durch eine Exzenterscheibe 20 realisiert, die eine Innenverzahnung 21 aufweist, die in eine entsprechende Außenverzahnung 11 der Antriebswelle 10 eingreift.

Insgesamt weist das Getriebe 1 vier Kröpfungen auf. Über die Kröpfungen werden vier um 90 Grad phasenverschobene Verdrängerpumpen mittels der Pleuel 30 angetrieben.

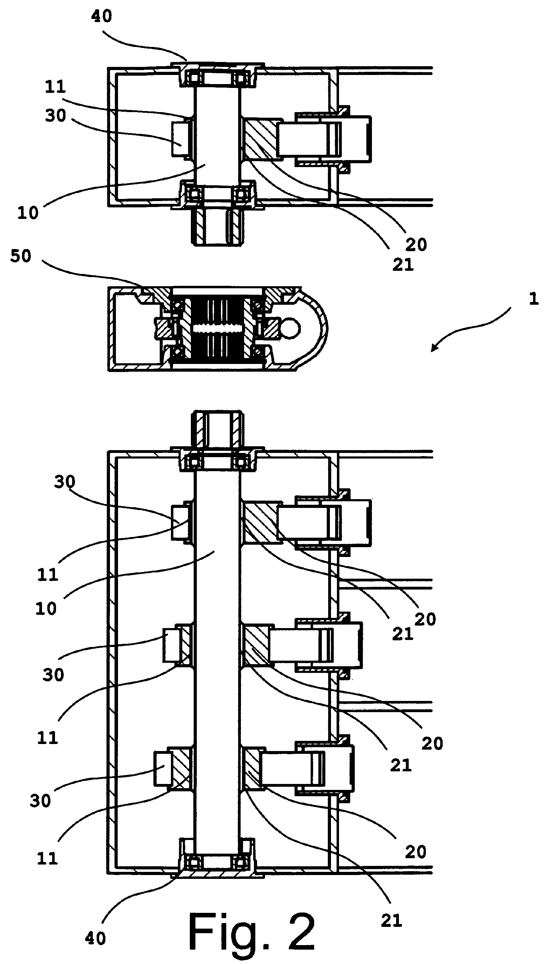

Figur 2 zeigt eine Explosionsdarstellung des Pumpengetriebes von Figur 1. Die obere und untere Einheit ist aus der Pumpengetriebeantriebseinrichtung 50 herausgezogen. Man erkennt die Außengewinde der Antriebswellen 10, die in eine entsprechende Innenverzahnung der Pumpengetriebeantriebseinrichtung eingreift.

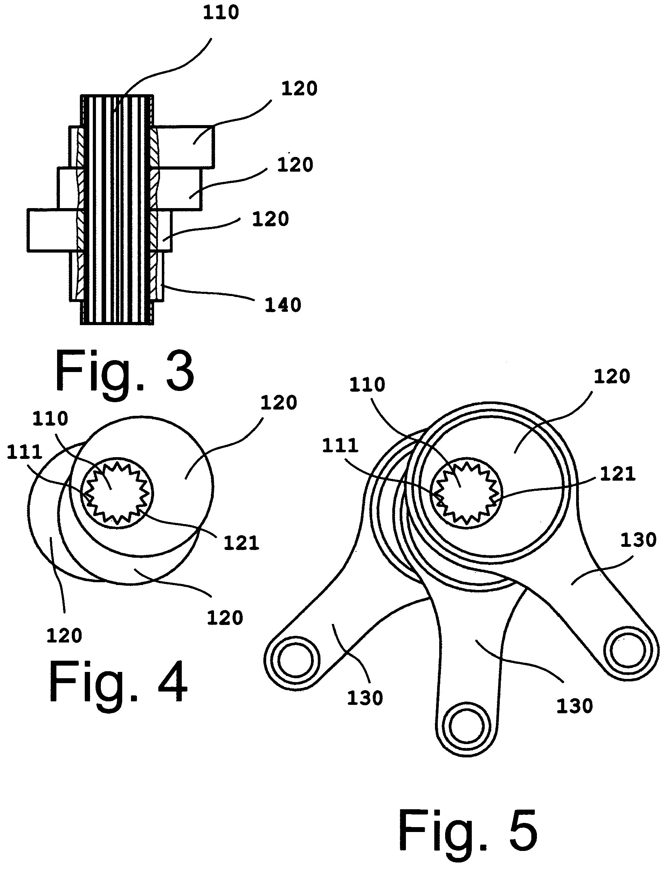

Die Figuren 3 bis 5 zeigen eine weitere Ausführung einer erfindungsgemäßen Pumpengetriebekurbelwelle, die insbesondere für ein Pumpengetriebe gemäß der EP 1 736 666 A1 geeignet ist.

Im Folgenden werden nur die Unterschiede zu der Ausführung von den Figuren 1 und 2 beschrieben und im Übrigen auf die Beschreibung des vorherigen Ausführungsbeispiels verwiesen. Gleiche Teile bzw. sich entsprechende Teile weisen gleiche aber um 100 erhöhte Bezugszeichen auf.

Die Ausführung der Figuren 3 bis 5 weist eine Antriebswelle 110 auf, auf der drei Kröpfungen 120 angeordnet sind. Die Kröpfungen weisen einen Abstand auf, der im Wesentlichen einer Pleueldicke entspricht. Auf der einen Seite ist des Weiteren eine Lagerscheibe 140 einer Lagerung dargestellt. Die Antriebswelle 110 weist eine Außenverzahnung auf, die in eine entsprechende Innenverzahnung der Exzenterscheibe 120 eingreift, um eine formschlüssige Verbindung zwischen der Antriebswelle 110 und den durch die Exzenterscheibe 120 gebildeten Kröpfungen zu erreichen. Auf den Exzenterscheiben 120 sind Pleuel 130 angeordnet, die auf eine dem Fachmann bekannte Weise mit Verdrängerpumpen verbunden sind. In Folge der exzentrischen Anordnung der Exzenterscheiben 120 auf der Antriebswelle 110 wird bei der Drehung der Antriebswelle 110 der Pleuel in Richtung der Pleuelstange hin- und herbewegt, wodurch eine Verdrängerpumpe bzw. Verdrängerpumpen angetrieben werden können. Die angetriebenen Verdrängerpumpen sind bei der Ausführung der Figuren 3 bis 5 jeweils in einem Winkel zu einander versetzt angeordnet, wodurch sich eine besonders kompakte Bauweise ergibt.

Die Ausführung der Figuren 3 bis 5 weist einteilige Pleuel 130 auf. Die Ausführung der Figuren 3 bis 5 kann auf einfache Weise dadurch montiert werden, dass die Pleuel 130 mit ihrer Aufnahme um die Exzenterscheiben 120 angeordnet werden, und die Antriebswelle 110 durch die Aufnahmen der Exzenterscheiben 120 gesteckt wird, um eine formschlüssige Verbindung zwischen der Antriebswelle 110 und den Exzenterscheiben 120 herzustellen.

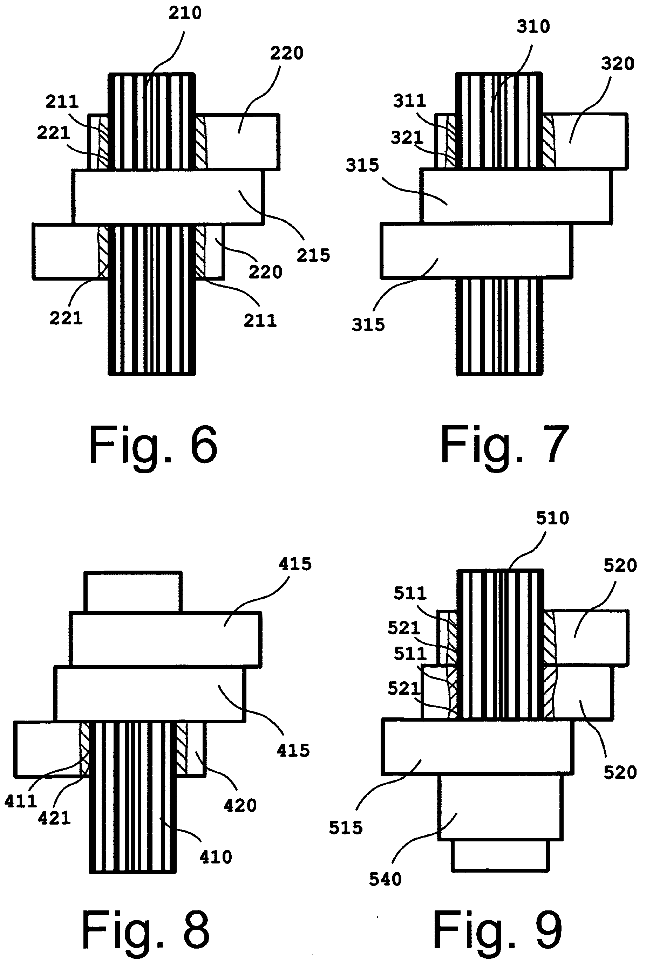

Die Figuren 6 bis 9 zeigen alternative Ausführungen der in den Figuren 3 bis 5 dargestellten Ausführung. Im Folgenden werden nur die Unterschiede zu dem Ausführungsbeispiel von den Figuren 3 bis 5 beschrieben. Gleiche Bauteile sind mit gleichen aber um das Einfache oder ein Vielfaches von 100 erhöhte Bezugszeichen bezeichnet. Im Folgenden wird daher auf die vorhergehende Beschreibung verwiesen.

Figur 6 zeigt eine Pumpengetriebekurbelwelle, bei der die mittlere Exzenterscheibe 215 fest ist. Die beiden äußeren Exzenterschreiben 220 weisen eine Innenverzahnung 221 auf, die mit einer Außenverzahnung 211 der Antriebswelle 210 formschlüssig verbunden ist. Die feste Exzenterscheibe 215 kann beispielsweise bei der Herstellung der Antriebswelle 210 hergestellt werden.

Die Figur 7 zeigt eine weitere Ausführung der Erfindung, bei der zwei feste Exzenterscheiben 315 vorgesehen sind. Zur Montage kann ein Pleuel von oben auf die feste Exzenterscheibe 315 und ein weiterer Pleuel von unten auf die untere Scheibe 315 geschoben werden. Diese beiden Pleuel können einteilig ausgebildet sein. Ein weiterer Pleuel wird auf die weitere Exzenterscheibe 320 geschoben, die eine Innenverzahnung 321 aufweist. Die Antriebswelle mit den festen Kröpfungen 315 kann dann mit der Exzenterscheibe 320 verbunden werden, indem die Außenverzahnung 311 mit der Innenverzahnung 321 verbunden wird.

Die Figur 8 zeigt eine weitere Ausführung der Erfindung. Diese Ausführung weist zwei feste Kröpfungen 415 auf. Eine weitere Kröpfung ist durch eine Exzenterscheibe 420 gebildet, die eine Innenverzahnung 421 aufweist, die mit einer Außenverzahnung 411 der Antriebswelle 410 verbunden ist.

Figur 9 zeigt eine weitere Ausführung der Erfindung, bei der zwei Exzenterscheiben 520 mit einer Innenverzahnung 521 auf einer Antriebswelle 510 angeordnet sind, die eine Außenverzahnung 511 aufweist, die eine formschlüssige Verbindung mit der Innenverzahnung 521 der Exzenterscheibe 520 bildet. Die Antriebswelle weist ferner eine feste Kröpfung 515 auf. Unterhalb der festen Kröpfung 515 ist eine Lagerscheibe 540 einer Lagerung vorgesehen, die fest mit der Antriebswelle 510 verbunden ist.

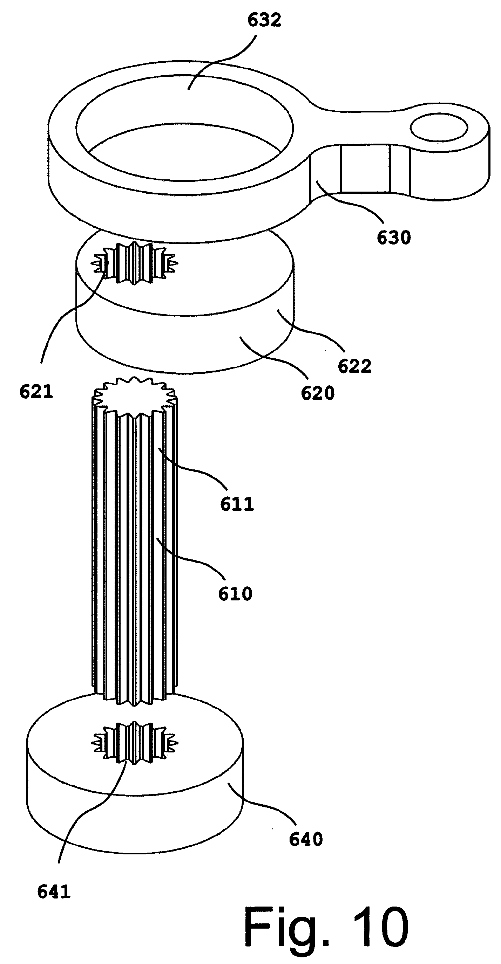

Figur 10 zeigt eine schematische Explosionsdarstellung, die die Verbindung von Exzenterscheiben 620 mit einer Antriebswelle 610 und einer Lagerscheibe 640 einer Lagerung darstellt. Die Antriebswelle 611 weist eine Außenverzahnung auf. Die Exzenterscheibe 620 weist eine Innenverzahnung 621 auf, die mit der Außenverzahnung 611 eine formschlüssige Verbindung zwischen der Exzenterscheibe 620 und der Antriebswelle 610 bildet. Die Lagerscheibe 640 weist eine zentrisch angeordnete Innenverzahnung 641 auf, die eine formschlüssige Verbindung zwischen der Antriebswelle 610 und der Lagerscheibe 640 bildet. Die Lagerscheibe 640 ist auf eine dem Fachmann bekannte Weise in einer Lagerschale bzw. in einer Lagerung angeordnet. Die Exzenterscheibe 620 weist eine Umfangsfläche 622 auf, auf der ein Pleuel 630 mit einer entsprechenden Innenumfangsfläche 632 aufgenommen ist.

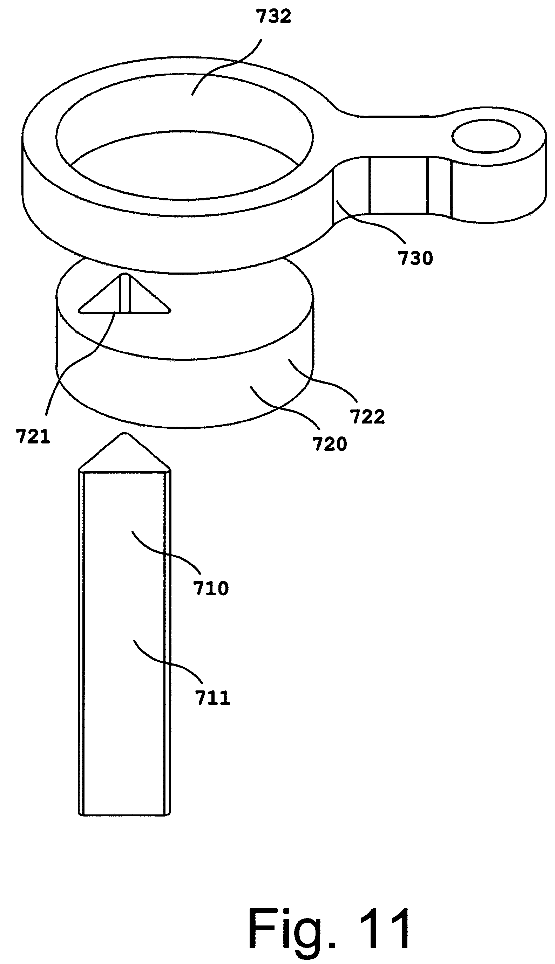

Figur 11 zeigt eine alternative Ausführung einer erfindungsgemäßen Pumpengetriebekurbelwelle, bei der die Antriebswelle 710 einen dreieckigen Querschnitt 711 aufweist. Die Exzenterscheibe 720 weist einen entsprechend dreieckigen inneren Querschnitt 721 auf. Dadurch wird eine formschlüssige Verbindung zwischen der Exzenterscheibe 720 und der Antriebswelle 710 erreicht. Die Exzenterscheibe 720 ist in drei verschiedenen Winkelorientierungen auf der Antriebswelle 710 anordbar. Bei einer Erweiterung von beispielsweise drei auf vier angetriebenen Verdrängerpumpen kann die Anpassung des Winkelversatzes zwischen den verschiedenen Exzenterscheiben dadurch erreicht werden, dass neue Exzenterscheiben 720 vorgesehen werden. Es ist nicht erforderlich, die gesamte Antriebswelle 710 mit den daran angeordneten bzw. daran ausgebildeten Kröpfungen auszutauschen. Es wird lediglich erforderlich sein, eine bestimmte Anzahl der Exzenterscheiben 720 auszutauschen bzw. in den jeweils erforderlichen Winkeln zu der Antriebswelle auf der Antriebswelle formschlüssig anzuordnen.

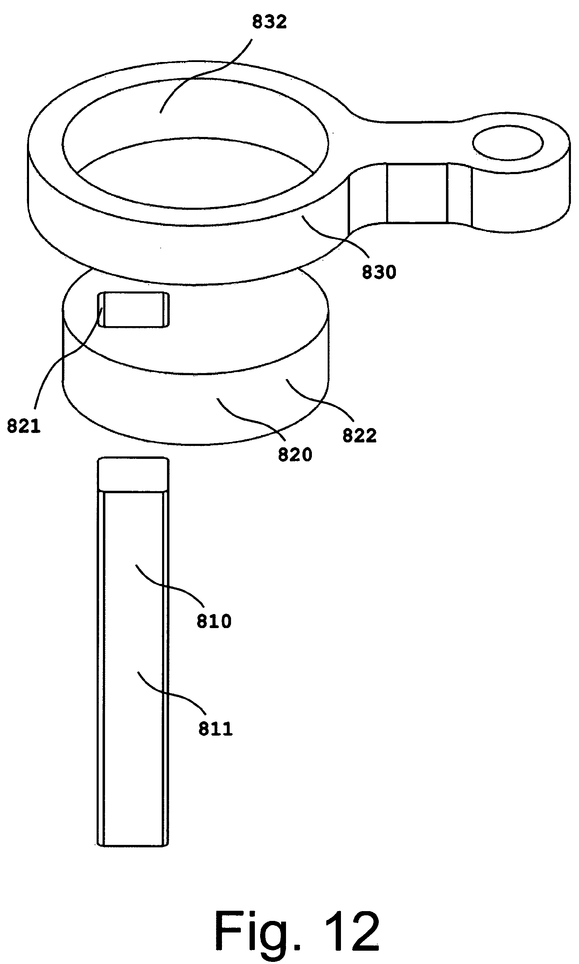

Figur 12 zeigt eine weitere Ausführung einer erfindungsgemäßen Pumpengetriebekurbelwelle zur Erläuterung eines alternativen Querschnitts der Antriebswelle 810. Die Antriebswelle 810 weist einen quadratischen Querschnitt 811 auf. Die Exzenterscheiben 820 weisen eine entsprechende Aufnahme mit einem im Wesentlichen quadratischen Querschnitt 821 auf. Die Aufnahme der Exzenterscheibe 820 ist im Wesentlichen in der Form eines abgerundeten Quadrats. Die Antriebswelle 810 weist eine entsprechende Außenform auf und bildet mit der Aufnahme in der Exzenterscheibe 820 eine formschlüssige Verbindung zwischen Exzenterscheibe 820 und der Antriebswelle 810.

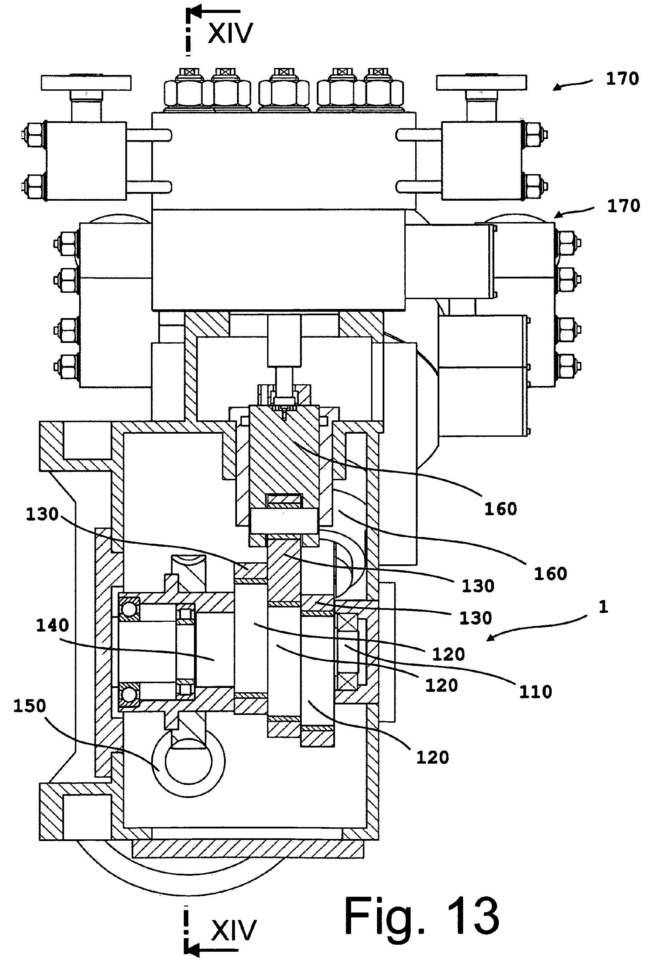

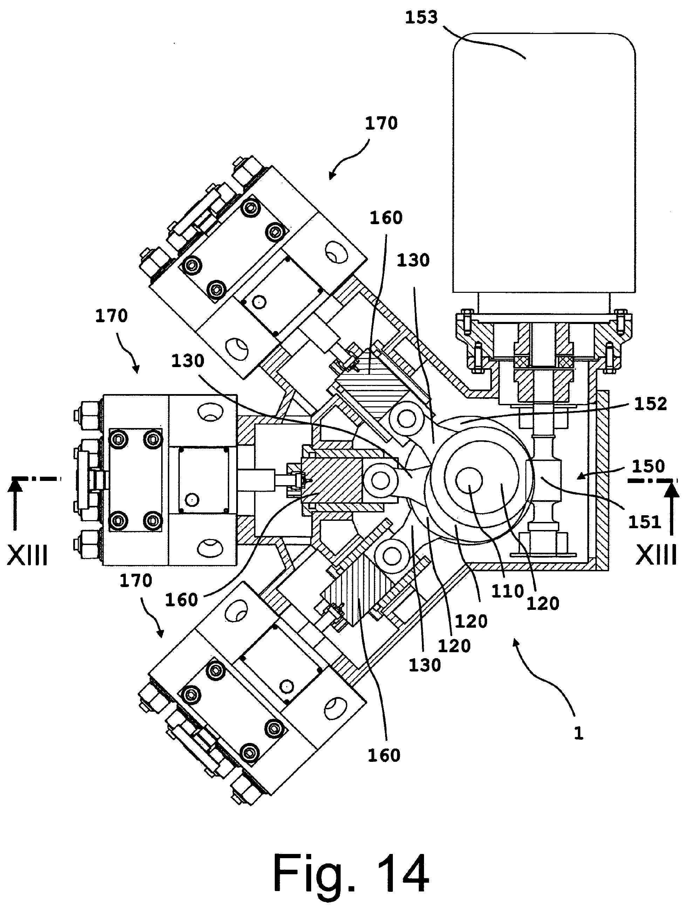

Die Figuren 13 und 14 zeigen ein erfindungsgemäßes Pumpengetriebe 1 mit drei Membranpumpen 170 und einer Pumpengetriebewelle gemäß Fig. 3. Die Antriebswelle 110 der Pumpengetriebewelle wird über ein Schneckengetriebe 150 von einem Antriebsmotor 153 angetrieben. Das Schneckengetriebe 150 weist eine Schnecke 151 und ein Schneckenrad 152 auf.

Die Pleuel 130 sind über jeweils eine Anlenkung 160 mit jeweils einer Membranpumpe 170 verbunden. Die Anlenkungen 160 wandeln zusammen mit den Pleuel 130 die Rotationsbewegungen der Exzenterscheiben 120 in lineare Bewegungen um, um die Verdränger der Membranpumpen 170 hin und her zu bewegen. Andere für den jeweiligen Einsatzzweck geeignete Verdrängerpumpen können vorgesehen und über geeignete Anlenkungen an die Pleuel 130 angelenkt werden.

Vorzugsweise sind die Pleuel 130 derart zueinander winkelversetzt, dass die drei Membranpumpen 170 gemeinsam eine möglichst gleichmäßige Förderung eines Fördermediums erreichen, d.h. dass die drei Membranpumpen jeweils um vorzugsweise 120° zueinander phasenverschoben arbeiten. Je nach der Anzahl an zusammengeschlossenen Pumpen kann eine geeignete Phasenverschiebung eingestellt werden.

Erfindungsgemäß kann bei einer Erweiterung eine zusätzliche Exzenterscheibe 120 auf der Antriebswelle 110 angeordnet werden und die anderen Exzenterscheiben 120 können entweder ausgetauscht oder um einen geeigneten Winkel verdreht auf der Antriebswelle 110 angeordnet werden, um wieder einen gleichmäßigen Phasenversatz zwischen den angetriebenen Pumpen zu erreichen.

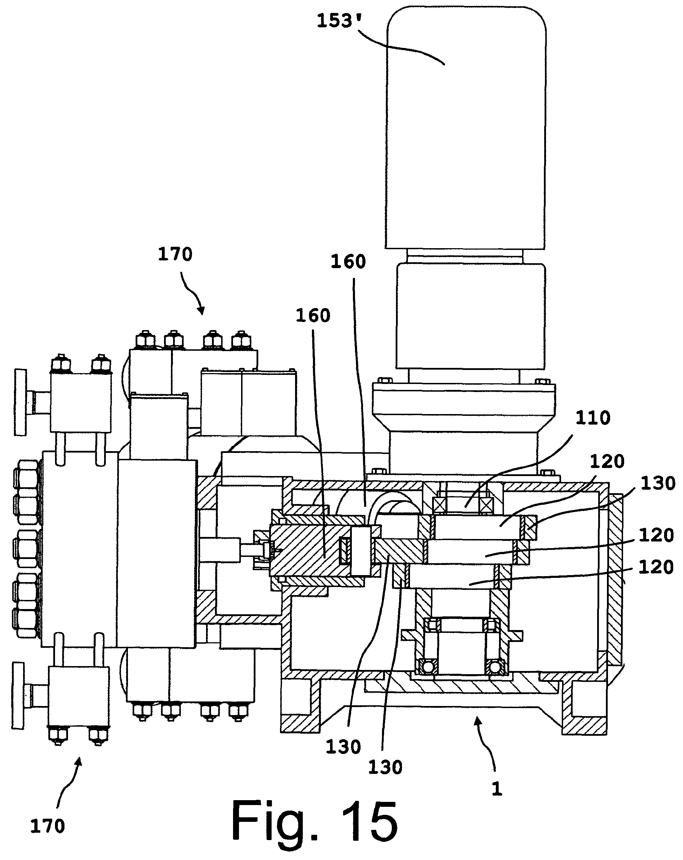

Figur 15 zeigt eine alternative Ausführung der Erfindung, die im Wesentlichen der in den Figuren 13 und 14 gezeigten Ausführung der Erfindung entspricht. Im Folgenden werden nur die Unterschiede zu der Ausführung der Figuren 13 und 14 beschrieben und im Übrigen auf deren Beschreibung verweisen. Bei der Ausführung von Fig. 15 treibt der Antriebsmotor 153' die Antriebswelle 110 direkt an. Der Antriebsmotor 153' ist daher gegenüber dem Antriebsmotor 153 der Ausführung der Figuren 13 und 14 um 90° verdreht angeordnet. Bei dieser Ausführung ergibt sich eine besonders kompakte Gesamtanordnung.

Die formschlüssige Verbindung zwischen der Antriebswelle 110 und der Exzenterscheibe 120 kann vorzugsweise dadurch erreicht werden, dass die Antriebswelle 110 eine Außenverzahnung und die Exzenterscheiben 120 eine entsprechende Innenverzahnung aufweisen. Alternative formschlüssige Verbindungen sind denkbar.

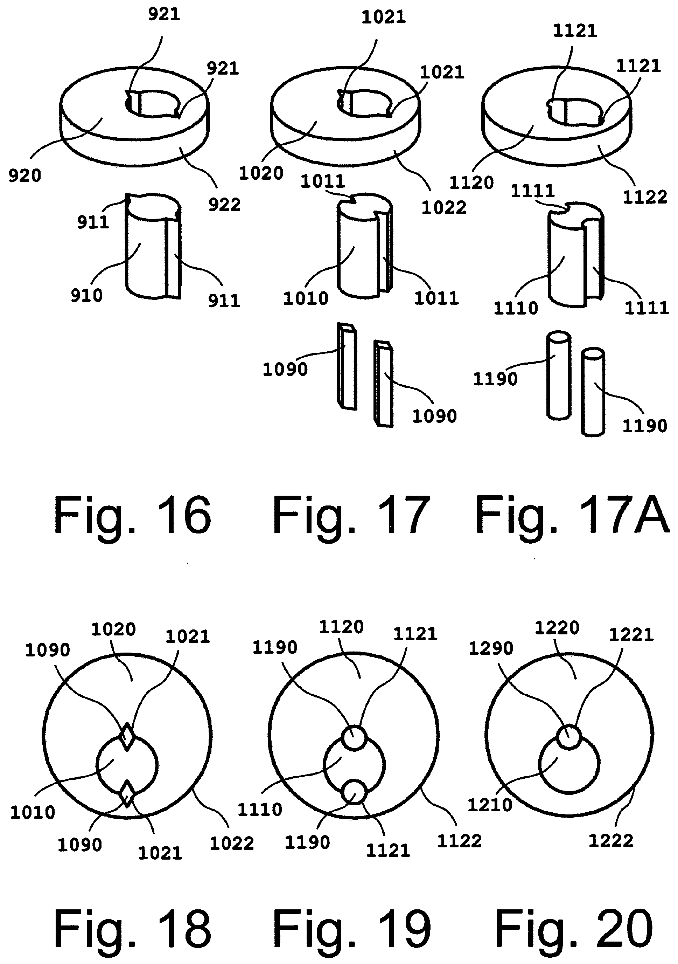

Beispielsweise zeigt Fig. 16 eine derartige Verbindung zwischen Exzenterscheibe 920 und Antriebswelle 910. Die Antriebswelle 910 weist zwei um 180° versetzte Vorsprünge 911 bzw. (Außen-)Zähne auf. Die Exzenterscheibe 920 weist in der Aufnahme für die Antriebswelle entspreche Aussparungen 921 bzw. (Innen-)Zähne auf, die mit den Vorsprüngen 911 jeweils einen Formschluss bilden. Bei dieser Ausführungsform kann die Exzenterscheibe 920 in zwei um 180° zueinander versetzten Stellungen auf der Antriebswelle 910 angeordnet werden. Für andere Winkel müssen andere Exzenterscheiben verwendet werden, bei denen die Ausnehmung und die Aussparungen entsprechend anders angeordnet sind.

Eine alternative Ausführung der Verbindung zwischen Exzenterscheibe 1020 und Antriebswelle 1010 ist in den Figuren 17, 18 und 21 gezeigt. Die Exzenterscheibe 1020 ist entsprechend der Exzenterscheibe 920 aufgebaut und weist eine Ausnehmung zur Aufnahme der Antriebswelle 1010 mit zwei um 180° versetzten Aussparungen bzw. Rillen 1021 auf. Die Antriebswelle 1010 weist ebenfalls zwei Aussparungen bzw. Rillen 1011 auf. Der Formschluss wird durch zwei Verbindungsglieder 1090 erreicht, die in den Aussparungen bzw. Rillen 1011, 1021 angeordnet werden, wie in Fig. 18 gezeigt.

Eine weitere Alternative Ausführung der Verbindung zwischen Exzenterscheibe 1120 und Antriebswelle 1110 ist in den Figuren 17A und 19 gezeigt. Im Gegensatz zu der Ausführung der Figuren 17 und 18 sind hier die Aussparungen 1111 bzw. 1121 nicht dreieckig, sondern rund ausgeführt. Die Verbindungsglieder 1190 sind dementsprechend nicht trapez- sondern kreisförmig ausgebildet. Andere geeignete Formen sind denkbar.

Fig. 20 zeigt eine weitere Ausführung der Verbindung zwischen Exzenterscheibe 1220 und Antriebswelle 1210, die im Wesentlichen der Ausführung der Figuren 17A und 19 mit dem Unterschied entspricht, das die Exzenterscheibe 1220 nur eine Aussparung bzw. Rille 1221 und die Antriebswelle 1210 nur eine Aussparung bzw. Rille 1211 aufweisen. Entsprechend ist auch nur ein Verbindungsglied 1290 vorgesehen.

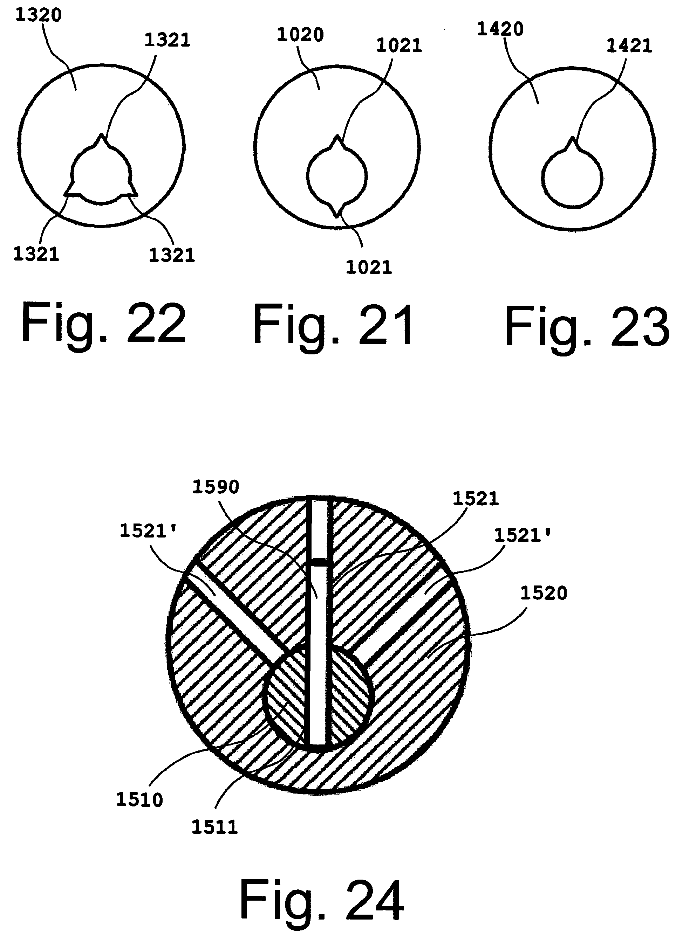

Figur 22 zeigt eine weitere Ausführung der Verbindung zwischen Exzenterscheibe 1320 und Antriebswelle 1310, die im Wesentlichen der Ausführung der Figuren 16, 18 und 21 mit dem Unterschied entspricht, dass die Exzenterscheibe 1320 drei Aussparungen bzw. Rillen 1321 aufweist, die um jeweils 120° zueinander versetzt angeordnet sind. Entsprechend kann die nicht gezeigte Antriebswelle ein, zwei oder drei Vorsprünge und/oder Aussparungen aufweisen. Gegebenfalls sind Verbindungsglieder vorzusehen, um einen Formschluss zwischen der Exzenterscheibe 1320 und der Antriebswelle zu schaffen. Wie bei den anderen Ausführungen der Erfindung können verschiedene Exzenterscheiben vorgesehen werden, um unterschiedliche Stellungen zu der Antriebswelle zu schaffen.

Fig. 23 zeigt eine weitere Ausführung der Verbindung zwischen Exzenterscheibe 1420 und Antriebswelle 1410, die im Wesentlichen der Ausführung der Figuren 16, 18 und 21 mit dem Unterschied entspricht, das die Exzenterscheibe 1420 nur eine Aussparung bzw. Rille 1421 und die Antriebswelle entsprechend nur eine Aussparung bzw. Rille aufweisen. Entsprechend ist auch nur ein Verbindungsglied bzw. ein Vorsprung bzw. Zahn auf der Antriebswelle vorgesehen.

Fig. 24 zeigt eine weitere Ausführung der Verbindung zwischen Exzenterscheibe 1520 und Antriebswelle 1510. Im Gegensatz zu den Ausführungen der Figuren 15 bis 23 und 25 bis 28 erfolgt der Formschluss hier durch ein Verbindungsglied 1590, das senkrecht zu der Längsrichtung bzw. Axialrichtung der Antriebswelle 1510 in eine Bohrung 1511 angeordnet wird, die in der Antriebswelle 1510 vorgesehen ist. Die Exzenterscheibe 1520 weist zumindest eine Bohrung 1521 auf, in die das Verbindungsglied 1590 eingreift, um den Formschluss herzustellen. Um andere Winkel zwischen der Antriebswelle 1510 und der Exzenterscheibe 1520 einzustellen, können weitere Bohrungen 1521' in der Exzenterscheibe vorgesehen sein bzw. bei Bedarf ausgebildet werden.

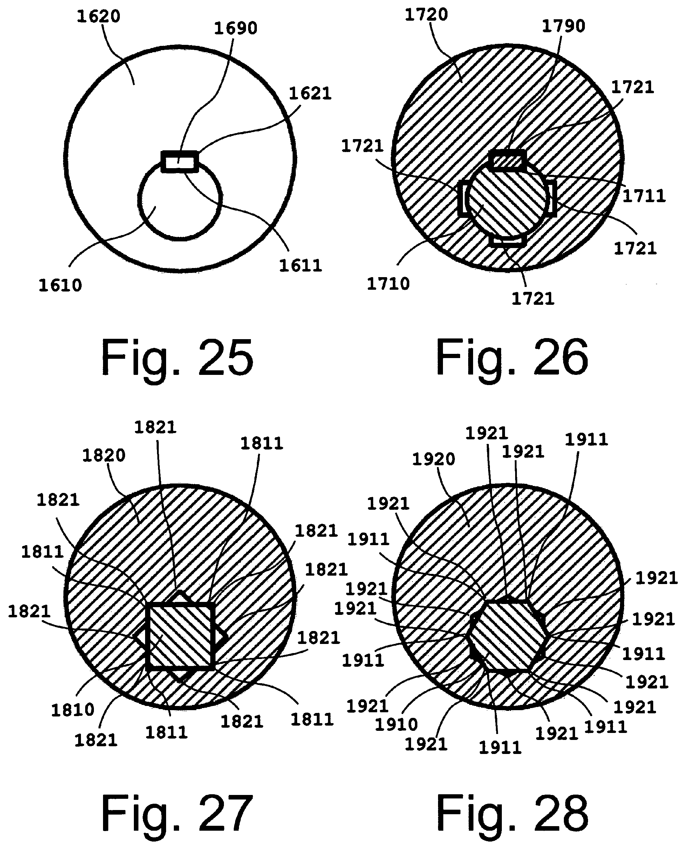

Fig. 25 zeigt eine weitere Ausführung der Verbindung zwischen Exzenterscheibe 1620 und Antriebswelle 1610. Die Aussparungen bzw. Rillen 1611 und 1621 bilden eine im Wesentlichen rechteckige Aufnahme, in der das Verbindungsglied 1690 angeordnet ist bzw. wird, um den Formschluss zwischen Antriebswelle 1610 und Exzenterscheibe 1620 zu schaffen. Um eine Exzenterscheibe in einem anderen Winkel zu der Antriebswelle anzuordnen, kann eine weitere Aussparung bzw. Rille in der Exzenterscheibe vorgesehen werden bzw. eine Exzenterscheibe mit einer anders angeordneten Aussparung bzw. Rille kann verwendet werden.

Fig. 26 zeigt eine weitere Ausführung der Verbindung zwischen Exzenterscheibe 1720 und Antriebswelle 1710. Im Unterschied zu der Ausführung von Fig. 25 weist die Exzenterscheibe 1720 vier Aussparungen bzw. Rillen 1721 auf, so dass die Exzenterscheibe 1720 in vier vorliegend um einen Winkel von 90° zueinander versetzten Orientierungen zu der Antriebswelle 1710 angeordnet werden kann.

Erfindungsgemäß kann die Antriebswelle ein Vier- oder Mehrkantprofil ähnlich wie eine Zahnwelle aufweisen. Die Drehmomentübertragung kann dann auch nicht über die Seitenflächen im Formschluss, sondern über die zahnähnlichen Ecken erfolgen. Derartige Ausführungen der Verbindung zwischen Exzenterscheibe und Antriebswelle sind in den Figuren 27 und 28 gezeigt.

Fig. 27 zeigt eine weitere Ausführung der Verbindung zwischen Exzenterscheibe 1820 und Antriebswelle 1810. Die Antriebswelle 1810 weist einen im Wesentlichen quadratischen Querschnitt auf. Die Exzenterscheibe 1820 weist eine entsprechende Ausnehmung zur Aufnahme der Antriebswelle 1810 auf, die die Form eines gleichmäßigen achteckigen Sterns aufweist. Die Exzenterscheibe 1820 weist somit acht Aussparungen bzw. Rillen 1821 auf, in denen die vier Ecken bzw. Vorsprünge 1811 der Antriebswelle 1810 aufgenommen werden können. Bei dieser Ausführung kann die Exzenterscheibe 1820 relativ zu der Antriebswelle 1810 in acht verschiedenen um 45° zueinander versetzten Orientierungen angeordnet werden.

Fig. 28 zeigt eine weitere Ausführung der Verbindung zwischen Exzenterscheibe 1920 und Antriebswelle 1910. Die Antriebswelle 1910 weist einen im Wesentlichen sechseckigen Querschnitt auf. Die Exzenterscheibe 1920 weist eine entsprechende Ausnehmung zur Aufnahme der Antriebswelle 1910 auf, die die Form eines gleichmäßigen zwölfseitigen Sterns aufweist. Die Exzenterscheibe 1920 weist somit zwölf Aussparungen bzw. Rillen 1921 auf, in denen die sechs Ecken bzw. Vorsprünge 1911 der Antriebswelle 1910 aufgenommen werden können. Bei dieser Ausführung kann die Exzenterscheibe 1920 relativ zu der Antriebswelle 1910 in zwölf verschiedenen um 30° zueinander versetzten Orientierungen angeordnet werden.

## Patentansprüche

1. Pumpengetriebekurbelwelle mit einer Antriebswelle (110) und mehreren Kröpfungen (120, 220, 320, 420, 520, 620, 720, 820, 920, 1020, 1120, 1220, 1320, 1420, 1520, 1620, 1720, 1820, 1920), die jeweils in zumindest einem Pleuel (130) zum Antrieb eines Verdrängers einer Pumpe anordbar sind,
wobei die Pumpengetriebekurbelwelle derart ausgebildet ist, dass mehrere Kröpfungen (120, 220, 320, 420, 520, 620, 720, 820, 920, 1020, 1120, 1220, 1320, 1420, 1520, 1620, 1720, 1820, 1920) in unterschiedlichen Winkeln zu der Antriebswelle (110) mit der Antriebswelle (110) formschlüssig und lösbar verbindbar sind, und die Antriebswelle (110) mit den mehreren Kröpfungen (120) formschlüssig drehfest verbunden ist,
**dadurch gekennzeichnet, dass**
jede Kröpfung (120) in unterschiedlichen Orientierungen zu der Antriebswelle (110) und somit zu zumindest einer anderen Kröpfung anordbar ist, indem die Kröpfungen (120) Aufnahmen mit einer Innenkontur aufweisen und die Antriebswelle (110) eine Außenkontur aufweist, wobei die Antriebswelle (110) mit ihrer Außenkontur durch die Innenkontur der Aufnahmen der Kröpfungen (120) steckbar ist.

2. Pumpengetriebekurbelwelle nach Anspruch 1, **dadurch gekennzeichnet, dass** zur formschlüssigen Verbindung zwischen Antriebswelle (1010) und zumindest einer der Kröpfungen (1020, 1120, 1220, 1520, 1620, 1720) zumindest ein Verbindungselement (1090, 1190, 1290, 1590, 1690, 1790) vorgesehen ist.

3. Pumpengetriebekurbelwelle nach einem der vorhergehenden Ansprüche, bei der die Antriebswelle (110) durch zumindest eine Kröpfung (120) verläuft, mit der die Antriebswelle (110) formschlüssig verbunden ist.

4. Pumpengetriebekurbelwelle nach einem der Ansprüche 1 oder 3, bei der die Antriebswelle (110) eine Außenverzahnung (11, 211, 311, 511, 611) aufweist, und die zumindest eine mit der Antriebswelle formschlüssig verbundene Kröpfung (20, 220, 320, 520, 620) eine Innenverzahnung (21, 221, 321, 521, 621) aufweist.

5. Pumpengetriebekurbelwelle nach einem der Ansprüche 1 oder 3, bei der die Antriebswelle (710, 810) einen Querschnitt eines Polygons, vorzugsweise eines regelmäßigen Polygons und weiter vorzugsweise eines gleichseitigen Dreiecks (711), gleichseitigen Vierecks, Quadrats (811), gleichseitigen Fünfecks, gleichseitigen Sechsecks, und/oder eines gleichseitigen bzw. beliebigen geeigneten Vielecks aufweist.

6. Pumpengetriebekurbelwelle nach einem der vorhergehenden Ansprüche, bei der die Pumpengetriebekurbelwelle zumindest eine Lagerscheibe (40, 140) aufweist, die formschlüssig mit der Antriebswelle (10, 110) verbunden ist.

7. Pumpengetriebekurbelwelle nach einem der vorhergehenden Ansprüche, bei der eine zusätzliche Kröpfung (215, 515) fest mit der Antriebswelle (210, 310, 410, 510) verbunden und/oder einteilig mit dieser ausgebildet sind.

8. Pumpengetriebekurbelwelle nach einem der Ansprüche 1 bis 6, bei der zwei zusätzliche Kröpfungen (315, 415) fest mit der Antriebswelle verbunden und/oder einteilig mit der Antriebswelle ausgebildet sind.

9. Pumpengetriebekurbelwelle nach Anspruch 9, bei der die beiden fest mit der Antriebswelle verbundenen und/oder mit der Antriebswelle (310, 410) einteilig ausgebildeten Kröpfungen (315, 415) benachbart zueinander angeordnet sind.

10. Pumpengetriebekurbelwelle nach einem der beiden vorhergehenden Ansprüche, bei der die zumindest eine formschlüssig mit der Antriebswelle (110) verbundene Kröpfung (320, 420) benachbart zu den beiden fest mit der Antriebswelle (110) verbundenen und/oder einteilig mit der Antriebswelle ausgebildeten zusätzlichen Kröpfungen (315, 415) angeordnet ist.

11. Pumpengetriebekurbelwelle nach einem der vorhergehenden Ansprüche, bei der die Kröpfungen (120) in Längsrichtung der Antriebswelle um ungefähr eine Pleueldicke zueinander versetzt angeordnet sind und/oder bei der die benachbarten Kröpfungen in Achsrichtung der Antriebswelle einen Abstand aufweisen, der im Wesentlichen einer Pleueldicke entspricht.

12. Pumpengetriebe mit einer Pumpengetriebekurbelwelle nach einem der vorhergehenden Ansprüche, wobei die mehreren Kröpfungen (120, 220, 320, 420, 520, 620, 720, 820, 920, 1020, 1120, 1220, 1320, 1420, 1520, 1620, 1720, 1820, 1920), die jeweils in zumindest einem Pleuel (130) zum Antrieb von Verdrängern einer Pumpe angeordnet sind.

13. Pumpengetriebe nach Anspruch 12, bei dem die Pleuel (130) eine einteilige Lagerschale zur Aufnahme der Kröpfung aufweisen und/oder die Pleuel (130) einteilig ausgebildet sind.

## Claims

1. A pump gear crankshaft including a drive shaft (110) and a plurality of cranks (120, 220, 320, 420, 520, 620, 720, 820, 920, 1020, 1120, 1220, 1320, 1420, 1520, 1620, 1720, 1820, 1920), which are each arrangeable in at least one connecting rod (13) for driving a displacement device of a pump, wherein the pump gear crankshaft is constructed so that the plurality of cranks (120, 220, 320, 420, 520, 620, 720, 820, 920, 1020, 1120, 1220, 1320, 1420, 1520, 1620, 1720, 1820, 1920) are positively and releasably connectable to the drive shaft (110) at different angles to the drive shaft (110) and the drive shaft (110) is positively rotatably fixedly connected to the plurality of cranks (120), **characterised in that** each crank (120) is arrangeable in different orientations to the drive shaft (110) and thus to at least one other crank **in that** the cranks (120) have seats with an internal contour and the drive shaft (110) has an external contour, wherein the drive shaft (110) is insertable with its external contour through the internal contour of the seats in the cranks (120).

2. A pump gear crankshaft as claimed in Claim 1, **characterised in that** at least one connecting element (1090, 1190, 1290, 1590, 1690, 1790) is provided for the positive connection between the drive shaft (1010) and at least one of the cranks (1020, 1120, 1220, 1520, 1620, 1720).

3. A pump gear crankshaft as claimed in one of the preceding claims, in which the drive shaft (110) extends through at least one crank (120), with which the drive shaft (110) is positively connected.

4. A pump gear crankshaft as claimed in one of Claims 1 or 3, in which the drive shaft (110) has an external series of teeth (11, 211, 311, 511, 611) and the at least one crank (20, 220, 320, 520, 620) positively connected to the drive shaft has an internal series of teeth (21, 221, 321, 521, 621).

5. A pump gear crankshaft as claimed in one of Claims 1 or 3, in which the drive shaft (710, 810) has the cross-section of a polygon, preferably a regular polygon and more preferably an equilateral triangle (711), an equilaterial tetragon, a square (811), an equilateral pentagon, an equilateral hexagon and/or an equilateral or any suitable polygon.

6. A pump gear crankshaft as claimed in one of the preceding claims, in which the pump gear crankshaft has at least one bearing disc (40, 140) which is positively connected to the drive shaft (10, 110).

7. A pump gear crankshaft as claimed in one of the preceding claims, in which an additional crank (215, 515) is rigidly connected to the drive shaft (210, 310, 410, 510) and/or is constructed integrally with it.

8. A pump gear crankshaft as claimed in one of Claims 1 to 6, in which two additional cranks (315, 415) are rigidly connected to the crankshaft and/or are constructed integrally with the crankshaft.

9. A pump gear crankshaft as claimed in Claim 9, in which the two cranks (315, 415), which are rigidly connected to the drive shaft and/or are constructed integrally with the drive shaft (310, 410), are arranged adjacent to one another.

10. A pump gear crankshaft as claimed in one of the two preceding claims, in which the at least one crank (320, 420) positively connected to the drive shaft (110) is arranged adjacent to the two additional cranks (315, 415) rigidly connected to the drive shaft (110) and/or constructed integrally with the drive shaft.

11. A pump gear crankshaft as claimed in one of the preceding claims, in which the cranks (120) are arranged offset from one another in the longitudinal direction of the drive shaft by approximately the size of the connecting rods and/or in which the adjacent cranks have a spacing in the axial direction of the drive shaft, which substantially corresponds to the size of the connecting rods.

12. A pump gear with a pump gear crankshaft as claimed in one of the preceding claims, wherein the plurality of cranks (120, 220, 320, 420, 520, 620, 720, 820, 920, 1020, 1120, 1220, 1320, 1420, 1520, 1620, 1720, 1820, 1920) are each arranged in at least one connecting rod (130) for driving displacement devices of a pump.

13. A pump gear as claimed in Claim 12, in which the connecting rods (130) have an integral bearing shell for receiving the crank and/or the connecting rods (130) are of integral construction.

## Revendications

1. Arbre de manivelle pour un engrenage à pompe avec un arbre d'entraînement (110) et plusieurs excentriques (120, 220, 320, 420, 520, 620, 720, 820, 920, 1020, 1120, 1220, 1320, 1420, 1520, 1620, 1720, 1820, 1920), qui peuvent être disposés à chaque fois dans au moins une bielle (130) pour l'entraînement d'un organe propulseur d'une pompe,
dans lequel l'arbre de manivelle pour un engrenage à pompe est conçu de manière telle que plusieurs excentriques (120, 220, 320, 420, 520, 620, 720, 820, 920, 1020, 1120, 1220, 1320, 1420, 1520, 1620, 1720, 1820, 1920) peuvent être reliés par engagement de forme et de façon amovible à l'arbre d'entraînement (110) selon des angles différents par rapport à l'arbre d'entraînement (110), et l'arbre d'entraînement (110) est solidaire en rotation par engagement de forme aux différents excentriques (120), **caractérisé en ce que** chaque excentrique (120) peut être disposé dans des orientations différentes par rapport à l'arbre d'entraînement (110) et, ainsi, par rapport à au moins un autre excentrique, dans lequel les excentriques (120) présentent des logements avec un contour intérieur et l'arbre d'entraînement (110) présente un contour extérieur, dans lequel l'arbre d'entraînement (110) peut être enfoncé avec son contour extérieur à travers le contour intérieur des logements des excentriques (120).

2. Arbre de manivelle pour un engrenage à pompe selon la revendication 1, **caractérisé en ce que** pour la liaison par engagement de forme entre l'arbre d'entraînement (1010) et au moins un des excentriques (1012, 1120, 1220, 1520, 1620, 1720) est prévu au moins un élément de liaison (1090, 1190, 1290, 1590, 1690, 1790).

3. Arbre de manivelle pour un engrenage à pompe selon l'une des revendications précédentes, dans lequel l'arbre d'entraînement (110) passe par au moins un excentrique (120), avec lequel l'arbre d'entraînement (110) est relié par engagement de forme.

4. Arbre de manivelle pour un engrenage à pompe selon l'une des revendications 1 ou 3, dans lequel l'arbre d'entraînement (110) présente une dentition extérieure (11, 211, 311, 511, 611), et le au moins un excentrique (20, 220, 320, 520, 620), relié par engagement de forme avec l'arbre d'entraînement, présente une dentition intérieure (21, 221, 321, 521, 621).

5. Arbre de manivelle pour un engrenage à pompe selon l'une des revendications 1 ou 3, dans lequel l'arbre d'entraînement (710, 810) présente une section transversale d'un polygone, de préférence d'un polygone régulier, et de préférence encore d'un triangle équilatéral (711), d'un quadrilatère équilatéral, d'un carré (811), d'un pentagone équilatéral, d'un hexagone équilatéral, et / ou d'un polygone équilatéral ou librement adapté.

6. Arbre de manivelle pour un engrenage à pompe selon l'une des revendications précédentes, dans lequel l'arbre de manivelle pour un engrenage à pompe présente au moins un disque d'appui (40, 140), qui est relié par engagement de forme à l'arbre d'entraînement (10, 110).

7. Arbre de manivelle pour un engrenage à pompe selon l'une des revendications précédentes, dans lequel un excentrique supplémentaire (215, 515) est relié fixement à l'arbre d'entraînement (210, 310, 410, 510) et / ou est conçu d'une seule pièce avec celui-ci.

8. Arbre de manivelle pour un engrenage à pompe selon l'une des revendications 1 à 6, dans lequel deux excentriques supplémentaires (315, 415) sont reliés fixement à l'arbre d'entraînement et / ou sont conçus d'une seule pièce avec l'arbre d'entraînement.

9. Arbre de manivelle pour un engrenage à pompe selon la revendication 9, dans lequel les deux excentriques (315, 415) reliés fixement à l'arbre d'entraînement et / ou conçus d'une seule pièce avec l'arbre d'entraînement (310, 410) sont disposés de façon contiguë les uns avec les autres.

10. Arbre de manivelle pour un engrenage à pompe selon l'une des deux revendications précédentes, dans lequel le au moins un excentrique (320, 420) relié par engagement de forme avec l'arbre d'entraînement (110) est disposé de façon contiguë aux deux excentriques supplémentaires (315, 415) reliés fixement à l'arbre d'entraînement (110) et / ou conçus d'une seule pièce avec l'arbre d'entraînement.

11. Arbre de manivelle pour un engrenage à pompe selon l'une des revendications précédentes, dans lequel les excentriques (120) sont disposés de façon décalée les uns par rapport aux autres d'une épaisseur de bielle environ dans le sens longitudinal de l'arbre d'entraînement et / ou dans lequel les excentriques contigus présentent un écartement dans le sens de l'axe de l'arbre d'entraînement, qui correspond essentiellement à une épaisseur de bielle.

12. Engrenage de pompe avec un arbre de manivelle pour un engrenage à pompe selon l'une des revendications précédentes, dans lequel les plusieurs excentriques (120, 220, 320, 420, 520, 620, 720, 820, 920, 1020, 1120, 1220, 1320, 1420, 1520, 1620, 1720, 1820, 1920) sont disposés à chaque fois dans au moins une bielle (130) pour l'entraînement d'organes propulseurs d'une pompe.

13. Engrenage de pompe selon la revendication 12, dans lequel les bielles (130) présentent une coquille de coussinet d'une seule pièce pour loger l'excentrique et / ou les bielles (130) sont conçues d'une seule pièce.
